# EUROPEAN PATENT APPLICATION

(11) **EP 2 647 871 A1**
(43) Date of publication of application: **09.10.2013**
(21) Application number: 11845290.3
(22) Date of filing: 28.03.2011
(51) Int. Cl.: F16F 15/04, F16F 9/05

(54) **AIR SPRING**

(30) Priority: 02.12.2010 JP 2010269653
(71) Applicant: Toyo Tire & Rubber Co., Ltd., Osaka-shi, Osaka 550-8661 (JP)
(72) Inventor: YASUNAGA,Yuki, Osaka 550-8661 (JP); MASUNAKA,Yoshitomo, Osaka-shi Osaka 550-8661 (JP)
(74) Representative: Kloiber, Thomas
(86) International application number: PCT/JP2011/057600
(87) International publication number: WO 2012/073537

(57) **Abstract**

An object of this invention is to provide an air spring in which airtightness can be ensured without complicating the structure thereof. Specifically, an air spring includes an upper face plate 1, a lower face plate 2, a tubular flexible member 3 interposed between the upper face plate 1 and the lower face plate 2, and an elastic stopper 4 that is attached to the lower face plate 2. The lower face plate 2 includes a bead receiving section 8 in which a bead section 3b at a lower end of the flexible member 3 is fitted, and a flange section 9 that is formed at a position that is further on an outer side in a radial direction than the bead receiving section 8. A through hole 15 is formed in the flange section 9. A fixing member is engaged with the through hole 15 so as to fix the lower face plate 2 and a top plate 13 of the elastic stopper 4 to each other.

## Description

### Technical Field

The present invention relates to an air spring that is used for a railway vehicle or the like.

### Background Art

As a conventional air spring that is used for a railway vehicle or the like, as shown in Figure 5 of Patent Literature 1, an air spring is known that includes an upper face plate that is attached to the vehicle body of the vehicle, a lower face plate that is disposed on a wheel side below the upper face plate, a rubber flexible member (bellows) that is provided across the upper face plate and the lower face plate, and an elastic stopper that is interposed between the lower face plate and a support frame on the wheel side. The aforementioned elastic stopper regulates fluctuations in the vertical direction of the vehicle body. In general, a laminated rubber structure in which a rubber layer and a steel plate are alternately laminated is used as the elastic stopper.

A top plate is provided at a top section of the elastic stopper, and the lower face plate is fixed to the top plate. More specifically, a bead receiving section into which a bead section at a lower end of the flexible member fits is formed in the lower face plate, and a through hole through which a bolt can be inserted is formed at a position that is further on an inner side in a radial direction than the bead receiving section.

In addition, in the top plate, a threaded hole into which a bolt can be screwed is formed at a position that corresponds to the through hole of the lower face plate. In a state in which the lower face plate and the top plate have been joined together, the lower face plate is fixed to the elastic stopper by inserting a bolt through the through hole in the lower face plate and screwing the bolt into the threaded hole in the top plate. Air is supplied to the inside of the flexible member to maintain the inside of the flexible member in a pressurized state. The air spring is configured to exert a buffering function with respect to a load or vibrations in the vertical direction by means of the flexible member that is inflated with pressurized air and the elastic stopper.

### Citation List

### Patent Literature

Patent Literature 1: Japanese Patent Laid-Open No. 10-288236

### Summary of Invention

### Technical Problem

As described above, since the inside of the flexible member is maintained in a pressurized state, it is necessary for the overall flexible member including the upper face plate and the lower face plate to be airtight. However, in Patent Literature 1, since an insertion hole for a bolt is formed in a lower face plate portion that is related with the airtightness of the flexible member, there is a risk of pressurized air passing through the insertion hole and leaking out from a gap between the lower face plate and the top plate.

Therefore, conventionally, a configuration has been adopted in which an annular groove section is formed in at least one of the lower face plate and the top plate at the joining faces of the lower face plate and the top plate, and airtightness at the two joining faces is ensured by joining the lower face plate and the top plate in a state in which an O-ring has been inserted into the annular groove section. Thus, an annular groove section and an O-ring are necessary to ensure the airtightness of the flexible member, and there has been the problem that the structure as an air spring is complicated by a corresponding amount.

The present invention has been made in consideration of the above problem, and an object of the invention is to provide an air spring in which airtightness can be ensured without complicating the structure thereof.

### Solution to Problem

An air spring according to the present invention for solving the above described problem includes: an upper face plate; a lower face plate; a tubular flexible member that is interposed between the upper face plate and the lower face plate; and an elastic stopper that is attached to the lower face plate; wherein: the lower face plate includes a bead receiving section in which a bead section at a lower end of the flexible member fits, and a flange section that is formed at a position that is further on an outer side in a radial direction than the bead receiving section; a through hole is formed in the flange section; and a fixing member is engaged with the through hole so as to fix the lower face plate and a top plate of the elastic stopper to each other.

According to the above described configuration, since a through hole is formed in a lower face plate portion (a flange section at a position that is further on an outer side in a radial direction than the bead receiving section) that is not related with the airtightness of the flexible member, and a through hole is not formed in a lower face plate portion (a portion at a position that is further on an inner side in a radial direction than the bead receiving section) that is related with the airtightness of the flexible member, it is possible to ensure the airtightness of the flexible member without complicating the structure of air spring such as in the case of forming an annular groove section in a joining face between the lower face plate and the top plate and using O-ring.

Preferably, the through hole is formed so as to be able to accommodate the fixing member. It is thereby possible to prevent the fixing member from interfering with the flexible member. In addition, preferably a configuration is adopted wherein: the flexible member includes bead sections that are formed at an upper end and a lower end thereof, and a tubular flexible section that is formed between the two bead sections; the bead section at the lower end of the flexible member is fitted in the bead receiving section; and a rubber seat is installed on the flange section to ensure that the through hole or the fixing member and at least the flexible section of the flexible member do not contact each other.

According to the above described configuration, even if the flexible section of the flexible member and the flange section repeatedly contact with and separate from each other as a result of displacement of the air spring, there is no risk of the flexible section and the through hole or the fixing member coming into contact with each other and thereby damaging the flexible section, and hence the durability as an air spring can be favorably maintained.

The type of elastic stopper is not particularly limited. For example, the elastic stopper may be a laminated rubber structure in which a rubber layer and a steel plate are alternately laminated, or an integral elastic body in a block state in which at least one part in a longitudinal direction thereof is formed to be hollow can be used as the elastic stopper.

However, when using an elastic stopper that is composed of an elastic body in a block state, not only displacements in the vertical direction, but also displacements in the front to rear and right to left directions increase. Therefore, in comparison to an air spring that uses an elastic stopper having a laminated rubber structure, a region at which the flexible section of the flexible member and the flange section of the lower face plate contact each other increases and the frequency of contact therebetween also increases, and contact of the through hole or the fixing member with the flexible section significantly affects the durability of the air spring. Consequently, when the aforementioned rubber seat is applied, in particular, to an air spring that uses an elastic stopper that is composed of an elastic body in a block state, it is possible to more favorably maintain the durability of the air spring.

### Advantageous Effects of Invention

According to the present invention, since the through hole with which the fixing member for fixing the lower face plate to the top plate of the elastic stopper engages is formed in the flange section that is formed at a position that is further on an outer side in a radial direction than the bead receiving section of the lower face plate, it is possible to ensure airtightness without complicating the structure of the air spring.

### Brief Description of Drawings

[Figure 1] Figure 1 is a longitudinal section that illustrates an embodiment of an air spring according to the present invention.
[Figure 2] Figure 2 is an enlarged view of a principal portion of Figure 1.
[Figure 3] Figure 3 is an enlarged view of a principal portion that illustrates the appearance of a fixing member that is different to a fixing member shown in Figure 2.
[Figure 4] Figure 4 is an enlarged view of a principal portion that illustrates the appearance of another fixing member that is different to the fixing member shown in Figure 2.
[Figure 5] Figure 5 is an enlarged view of a principal portion that illustrates the appearance of a rubber seat that is different to a rubber seat shown in Figure 2.

### Description of Embodiment

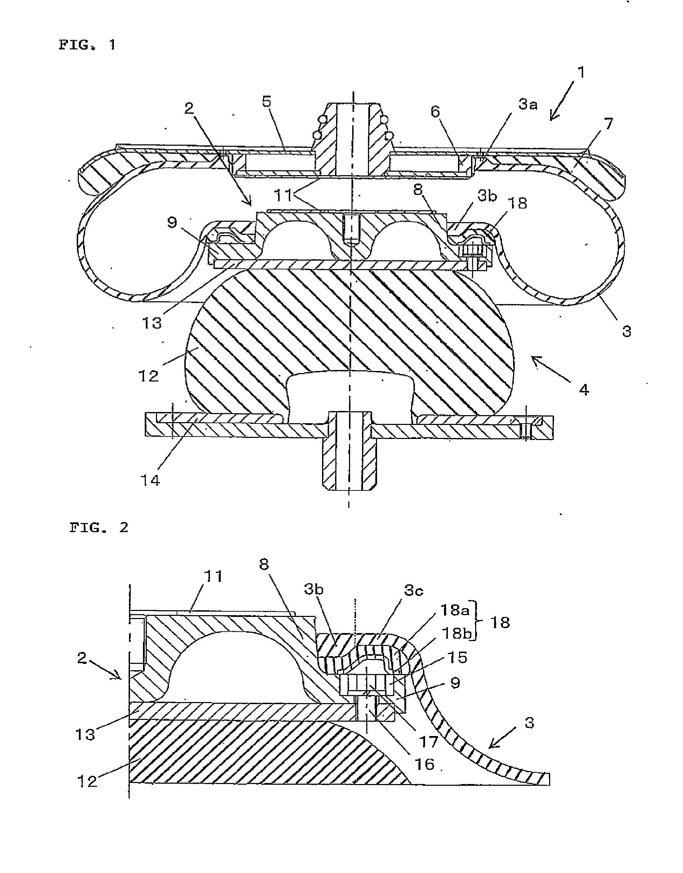

An embodiment of the present invention is described hereunder based on the drawings. Figure 1 and Figure 2 are views that illustrate an embodiment of an air spring for a railway vehicle according to the present invention. Figure 1 is a longitudinal section of the air spring, and Figure 2 is an enlarged view of a principal portion of Figure 1.

The air spring includes an upper face plate 1 that is attached to a body of a vehicle, a lower face plate 2 that is disposed on a wheel side below the upper face plate 1, a tubular flexible member 3 that is interposed between the upper face plate 1 and the lower face plate 2, and an elastic stopper 4 that is interposed between the lower face plate 2 and a support frame on the wheel side.

According to the present embodiment, a rubber bellows is used as the flexible member 3. The flexible member 3 is made of laminated rubber in which a reinforced rubber layer in which a reinforcing cord has been embedded is used as an intermediate layer, and thick bead sections 3a and 3b at which the reinforced rubber layer is wound around a bead core are formed at an upper end and a lower end of the flexible member 3. That is, the flexible member 3 includes the bead sections 3a and 3b that are formed at the upper and lower ends thereof, and a thin tubular flexible section 3c that is composed of laminated rubber that is formed between the bead sections 3a and 3b.

As shown in Figure 1, the upper face plate 1 includes a disc-shaped support plate 5 that is made of metal, a cylindrical bead receiving section 6 that protrudes towards the lower face plate at a center part of the support plate 5, and a protective rubber layer 7 that is provided at a portion that is further on an outer side in the radial direction than the bead receiving section 6 on the undersurface of the support plate 5.

As shown in Figure 1 and Figure 2, the lower face plate 2 is formed of a metallic material in a disc shape. A cylindrical bead receiving section 8 that protrudes towards the upper face plate 1 is formed at a center part of the lower face plate 2, and a flange section 9 is formed at a position that is further on an outer side in the radial direction than the bead receiving section 8. The bead receiving sections 6 and 8 also fulfill a function of ensuring safe running of the vehicle when air has escaped from inside the flexible member 3 (when the flexible member 3 is deflated), which is realized by the bead receiving section 6 sitting on the bead receiving section 8.

A sliding sheet 11 is bonded to each of the contacting faces at which the bead receiving sections 6 and 8 contact at a time of deflation. The sliding sheet 11 is made of thermoplastic or thermosetting synthetic resin that can be formed into a thin and strong sheet, and a material that has a small coefficient of friction is used therefor. As specific examples thereof, fluorocarbon resin, polyethylene, and polypropylene can be mentioned. A fluorocarbon resin sheet is used according to the present embodiment.

The elastic stopper 4 includes a rubber molding 12 made of vulcanized rubber in a block state, and a top plate 13 and a base plate 14 that are attached to a top section and a bottom section of the rubber molding 12, respectively. The rubber molding 12 is made in the shape of a thick inverted bowl, and the top plate 13 and the base plate 14 are bonded by vulcanization to the rubber molding 12.

The lower face plate 2 is fixed to the top plate 13 by fixing members. More specifically, through holes 15 in which the fixing members are engaged are formed in a flange section of the lower face plate 2. The through holes 15 are formed at six places at 60-degree intervals in the circumferential direction. According to the present embodiment, a threaded rod 16 as a male thread and a nut 17 as a female thread into which the threaded rod 16 is threaded are used as a fixing member. The threaded rods 16 are provided in a protruding manner in the top plate 13 at positions that correspond to the through holes 15 in the lower face plate.

Note that, each through hole 15 is formed in a shape that can accommodate the corresponding nut 17. That is, for each through hole 15, a stepped structure is adopted in which a concave section that can accommodate the nut 17 is formed in the flange section 9, and a hole having a smaller diameter than that of the concave section is formed at the center of the concave section. When fixing the lower face plate 2 to the top plate 13, it is sufficient to engage each threaded rod 16 with the small-diameter hole of the corresponding through hole 15 and thread the nut 17 onto the tip of the threaded rod 16. Thus, the nut 17 can be accommodated in the concave section of the through hole 15.

A rubber seat 18 is installed on the surface of the flange section 9. The rubber seat 18 is formed in a ring shape, and covers the entire surface of the flange section 9, including the through holes 15, by fitting together with the bead receiving section 8 of the lower face plate. The bead section 3b at the lower end of the flexible member 3 is fitted into the bead receiving section 8 in a state in which the rubber seat 18 is disposed on the surface of the flange section 9.

Thus, the configuration is such that the rubber seat 18 is interposed between the flexible member 3 and the flange section 9, and the flexible section 3c of the flexible member 3 and the through holes 15 or the fixing members do not directly contact each other. The rubber seat 18 is formed in a shape in which the cross-sectional shape thereof in the radial direction is curved in a convex shape, and is constituted by a laminated structure in which a rubber layer 18a on an upper face side and a metal reinforcement layer 18b on a lower face side are integrally laminated.

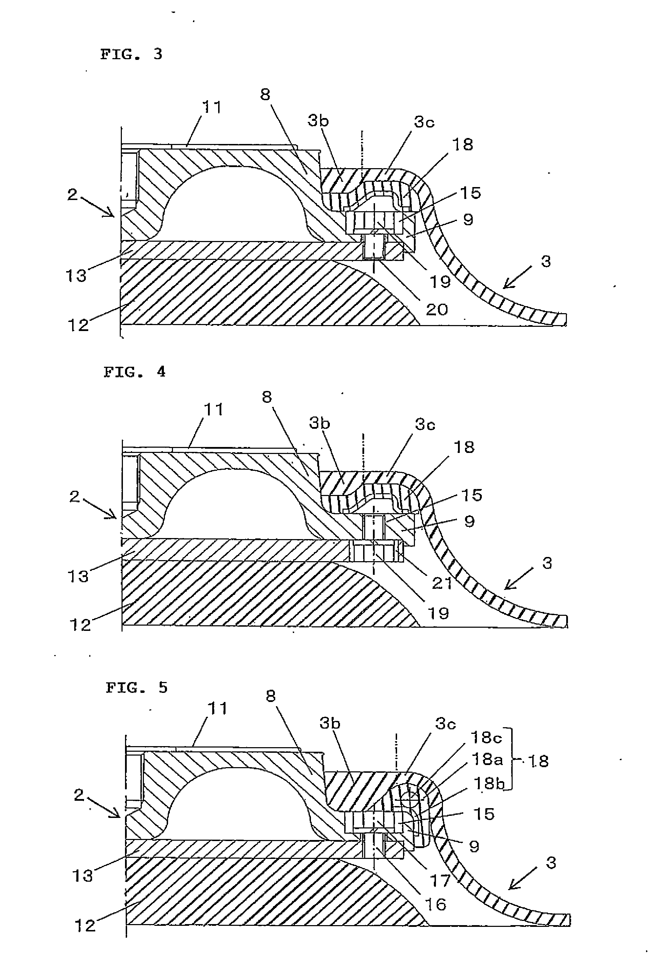

Although a threaded rod and a nut are used as a fixing member according to the present embodiment, the present invention is not limited thereto, and as another form of the fixing member, as shown in Figure 3, a bolt 19 as a male thread and a threaded hole 20 in which a female thread has been cut in an inner face thereof can also be used.

In this case, the through hole 15 in the flange section 9 has the same shape as in Figure 2, and the threaded hole 20 is formed at the place at which the threaded rod 16 was formed in Figure 2. Further, in a state in which the lower face plate 2 and the top plate 13 are joined, it is sufficient to engage the bolt 19 with the through hole 15 and thread the bolt 19 into the threaded hole 20. In this case also, the head of the bolt 19 is accommodated in the through hole 15.

It is also possible to form a female thread in the flange section 9. Specifically, as shown in Figure 4, the through hole 15 in the flange section 9 is formed as a straight hole, a female thread is cut in an inner face thereof, and an engagement hole 21 is formed for engaging a bolt with the top plate 13.

It is sufficient to engage the bolt 19 with the engagement hole 21 from the lower face side of the top plate 13 and thread the bolt 19 into the through hole 15. Note that, in this case, if the engagement hole 21 of the top plate 13 is formed as a stepped structure that can accommodate the head of the bolt, it is possible to avoid a situation in which the head of the bolt 19 comes in contact with the elastic stopper 4 when the air spring is displaced.

In addition, although in the present embodiment the rubber seat 18 is formed in a shape that covers the entire surface of the flange section 9, the present invention is not limited thereto, and as another form of the rubber seat 18, as shown in Figure 5, a configuration can also be adopted in which the rubber seat 18 is shaped so that the through hole or the fixing member and at least the flexible section 3c of the flexible member 3 do not contact each other. Specifically, it is sufficient to form the rubber seat 18 in a shape that, with respect to the flange section 9, covers only a portion thereof that is on an outer side in the radial direction at which there is a possibility of contact with the flexible section 3c.

Note that, in this case, the rubber seat 18 is formed so that a cross-section thereof in the radial direction is a substantially "L" shape, and misalignment of the rubber seat 18 can be prevented by fitting the rubber seat 18 into an outer edge corner section of the flange section 9. In addition, deformation of the rubber seat 18 can be prevented more reliably by embedding an annular reinforcing material 18c such as a metal wire in a rubber layer of the rubber seat 18.

### Industrial Applicability

The present invention can be advantageously utilized for an air spring that is mounted in a railway vehicle.

### Reference Signs List

- 1: Upper face plate
- 2: Lower face plate
- 3: Flexible member
- 4: Elastic stopper
- 5: Support plate
- 6, 8: Bead receiving section
- 7: Protective rubber layer
- 9: Flange section
- 11: Sliding sheet
- 12: Rubber molding
- 13: Top plate
- 14: Base plate
- 15: Through hole
- 16: Threaded rod
- 17: Nut
- 18: Rubber seat
- 19: Bolt
- 20: Threaded hole
- 21: Engagement hole

## Claims

1. An air spring, comprising:
an upper face plate;
a lower face plate;
a tubular flexible member that is interposed between the upper face plate and the lower face plate; and
an elastic stopper that is attached to the lower face plate;
wherein:
the lower face plate comprises a bead receiving section in which a bead section at a lower end of the flexible member fits, and a flange section that is formed at a position that is further on an outer side in a radial direction than the bead receiving section;
a through hole is formed in the flange section; and
a fixing member is engaged with the through hole so as to fix the lower face plate and a top plate of the elastic stopper to each other.

2. The air spring according to claim 1, wherein the through hole is formed so as to be able to accommodate the fixing member.

3. The air spring according to claim 1 or 2, wherein:
the flexible member comprises bead sections that are formed at an upper end and a lower end thereof, and a tubular flexible section that is formed between the two bead sections;
the bead section at the lower end of the flexible member is fitted in the bead receiving section; and
a rubber seat is installed on the flange section to ensure that the through hole or the fixing member and at least the flexible section of the flexible member do not contact each other.

4. The air spring according to claim 3, wherein the elastic stopper comprises an elastic body in which at least one part in a longitudinal direction thereof is formed to be hollow.
